# EUROPÄISCHE PATENTSCHRIFT

(11) **EP 1 311 769 B1**
(45) Veröffentlichungstag und Bekanntmachung des Hinweises auf die Patenterteilung: **23.11.2005**
(21) Anmeldenummer: 01965171.0
(22) Anmeldetag: 04.08.2001
(51) Int. Cl.: F16B 21/07

(54) **HALTECLIP ZUR BEFESTIGUNG VON FUNKTIONSELEMENTEN AUF EINEM BOLZEN**
RETAINING CLIP FOR FIXING FUNCTIONAL ELEMENTS ON A SHANK
CLIP PERMETTANT DE FIXER DES ELEMENTS FONCTIONNELS SUR UN BOULON

(30) Priorität: 19.08.2000 DE 10040757
(43) Veröffentlichungstag der Anmeldung: 21.05.2003
(73) Patentinhaber: A. Raymond & Cie, 38028 Grenoble (FR)
(72) Erfinder: GOMBERT, Stéphane, F-38110 Grenoble (FR)
(74) Vertreter: Rüttgers, Joachim
(86) Internationale Anmeldenummer: PCT/EP2001/009035
(87) Internationale Veröffentlichungsnummer: WO 2002/016786

(56) Entgegenhaltungen:
- EP-A- 0 666 428
- DE-A- 19 932 862
- GB-A- 2 155 534
- PATENT ABSTRACTS OF JAPAN vol. 1999, no. 09, 30. Juli 1999 (1999-07-30) & JP 11 093932 A (POP RIVET FASTENER KK), 6. April 1999 (1999-04-06)
- PATENT ABSTRACTS OF JAPAN vol. 1995, no. 10, 30. November 1995 (1995-11-30) & JP 07 174127 A (TOUGOU SEISAKUSHO:KK;OTHERS: 01), 11. Juli 1995 (1995-07-11)

## Beschreibung

Die Erfindung bezieht sich auf einen Halteclip zur Befestigung von Funktionselementen auf einem Bolzen, insbesondere auf einem längsgerippten Kunststoffbolzen, nach dem Oberbegriff des Anspruchs 1 wie schon aus dem Dokument JP 1109932 bekannt.

Derartige Halteclipse besitzen üblicherweise einen Aufnahmekörper für den Bolzen mit mehreren, stufenförmig versetzt gegenüberliegenden Haltelamellen, deren zur Mitte gerichteten Haltekanten sich fest an der Bolzenwand anlegen (vgl. **DE - PS 34 08 612).**

In der **DE 199 32 862-A1** ist ein ähnlich wirkender Halteclip beschrieben zur lösbaren Befestigung auf einem längsgerippten Kunststoffbolzen, bei welchem am unteren Rand des Aufnahmekörpers schräg nach unten abstehende, flexible Stützbeine angeformt sind. Diese spreizen sich beim Niederdrücken des Halteclips auseinander und erzeugen dadurch einen Gegendruck, welcher dafür sorgt, daß sich die Haltekanten in die Bolzenrippen eingraben.

Zum ordnungsgemäßen Setzen dieser Halteclipse kommt es darauf an, daß der Halteclip weit genug auf den Bolzen niedergedrückt wird. Ob der Clip "weit genug" auf dem Bolzen niedergedrückt ist, richtet sich ganz nach dem subjektiven Gefühl des Monteurs. So kann es - insbesondere bei nicht einsehbaren Befestigungsstellen - je nach der aufgewendeten Kraft beim Niederdrücken vorkommen, daß der Halteclip unten noch nicht aufliegt. Wenn der Clip dann noch lose auf dem Bolzen taumelt, kann er sich unter Umständen freiarbeiten und vom Bolzen lösen.

Aufgabe der Erfindung ist es daher, den Halteclip so zu gestalten, daß der Monteur ein sicheres Zeichen für eine korrekte Montage erhält.

Diese Aufgabe wird erfindungsgemäß bei einer gattungsgemäßen Vorrichtung mit den kennzeichnenden Merkmalen des Anspruchs 1 gelöst.

Da das hörbare Anschlagen aufgrund des allgemeinen Lärmpegels in der Montagehalle möglicherweise nicht laut genug sein kann, wird in Weiterbildung der Erfindung vorgeschlagen, daß kurz vor dem freien Ende des Stabes an der zur Querwand gerichteten Seite eine nach oben abstehende, hammerartige Nase angeformt und über der Nase in der Querwand eine entsprechende Aussparung vorgesehen ist, in welche die Nase beim Überspringen des Vorsprunges durch den Stab eintaucht. Nun hat der Monteur die Möglichkeit, neben dem hörbaren Anschlag noch das Eintauchen der hammerartigen Nase in die Aussparung mit der Daumenkuppe zu spüren.

Dieses Erfühlen des Montagebeweises läßt sich nach einem weiteren Merkmal der Erfindung noch verstärken, wenn die Höhe der Nase so bemessen ist, daß die Nasenspitze nach dem Eintauchen in die Aussparung auf der Anssenseite der Querwand um einen geringen Betrag vorsteht. Dadurch wird nicht nur der Schlag auf die Daumenkuppe verstärkt, sondern die vorstehende Spitze zeigt auch noch optisch an, daß der Stab am Vorsprung vorbeigeschnellt ist. In der Zeichnung sind mehrere Ausführungsbeispiele der Erfindung dargestellt, welche nachfolgend näher beschrieben werden sollen. Es zeigt
- Fig. 1: einen Halteclip in Seitenansicht vor dem Niederdrücken auf einen längsgerippten Kunststoffbolzen,
- Fig. 2: den gleichen Halteclip während des Niederdrückens auf den Kunststoffbolzen,
- Fig. 3: den gleichen Halteclip beim Niederdrücken kurz vor Erreichen der Endstellung,
- Fig. 4: den gleichen Halteclip bei Erreichen der Endstellung mit hochgeschnelltem Stab,
- Fig. 5: den Halteclip in der gleichen Montagesituation mit einer hammerartigen Nase auf dem freien Stabende, welche in eine Aussparung eintaucht,
- Fig. 6: den Halteclip in der gleichen Montagesituation mit einer über die Aussparung hervortretenden Nasenspitze und
- Fig. 7: ein Montagebeispiel für einen Halteclip, der in einem Montagetopf versenkt ist.

Der in den Figuren dargestellte Halteclip dient zur Befestigung von Funktionselementen auf einem Bolzen **1,** insbesondere auf einem längsgerippten Kunststoffbolzen. Der Clip besteht hierbei aus einem den Bolzen **1** aufnehmenden Aufnahmekörper **2** und an diesem angeformten, stangenartigen Haltemittel **3** für die in der Zeichnung nicht dargestellten Funktionselemente, welche beispielsweise aus Kabelbäumen bestehen können, die an den Haltestangen **3** mittels eines Klebebandes festgewickelt werden.

Der Aufnahmekörper **2** ist mit mehreren, stufenförmig versetzt gegenüberliegenden Haltelamellen **4** versehen, welche zur Mitte gerichtete, vorzugsweise halbrunde Haltekanten **5** aufweisen, die sich nach dem Aufdrücken des Halteclips auf den längsgerippten Bolzen an dessen Bolzenrippen **6** anlegen. Die Haltelamellen **4** sind zwischen zwei Seitenwänden **7** und **8** angeformt, die am unteren Ende mit einem kreisrunden Rand **9** abschließen und am oberen Ende von einer Querwand **10** überdeckt werden. Am Rand **9** des Aufnahmekörpers **2** sind drei schräg nach unten abstehende, flexible Stützbeine **11** angeformt, welche sich beim Niederdrücken des Halteclips auseinanderspreizen und dadurch einen Gegendruck erzeugen. Die Haltekanten **5** der Lamellen **4** sind derart schräg nach oben gerichtet, daß diese sich aufgrund des Gegendruckes in die Bolzenrippen **6** eingraben und so für eine feste Verankerung des Halteclips auf dem Bolzen **1** sorgen.

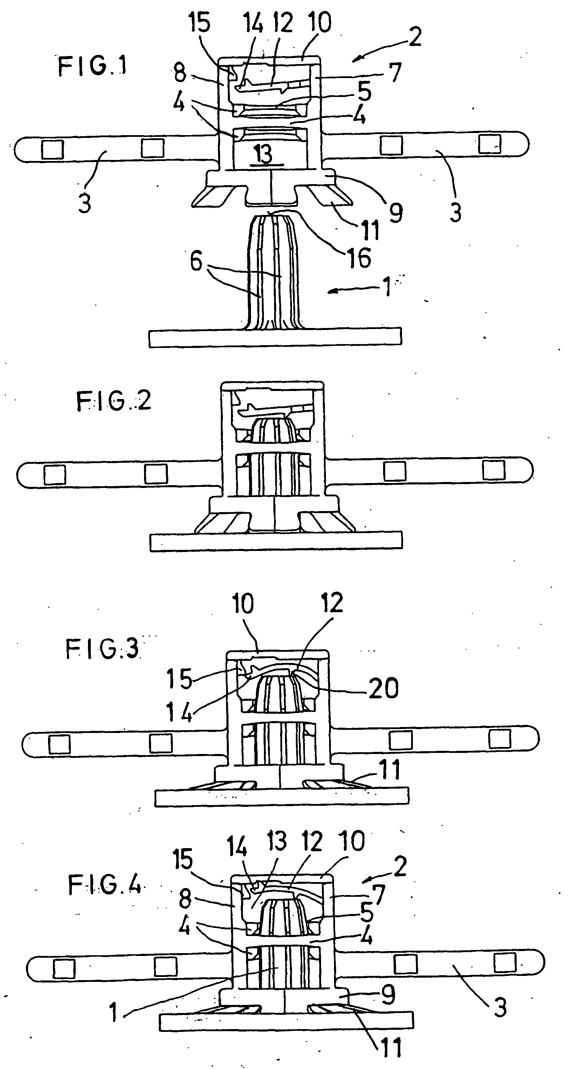

Oberhalb der Haltelamellen **4** ist an der einen Seitenwand **7** ein flexibler Stab **12** angeformt, welcher sich quer über den Aufnahmeraum **13** erstreckt. Das freie, auffederbare Ende **14** des Stabes **12** endet dicht unterhalb eines Vorsprungs **15,** welcher an der gegenüberliegenden Seitenwand **8** angeformt ist. Die vorerwähnte Querwand **10** überdeckt den Aufnahmeraum **13** dicht oberhalb des Stabes **12.** Beim Einführen des Bolzens **1** in den Aufnahmeraum **13** wird das freie Stabende **14** von der Stirnfläche **16** des Bolzens **1** nach oben gedrückt (**Figur 2 und 3)** und schlägt nach dem Überspringen des Vorsprungs **15** durch den Stab **12** an der Querwand **10** hörbar an (**Figur 4**).

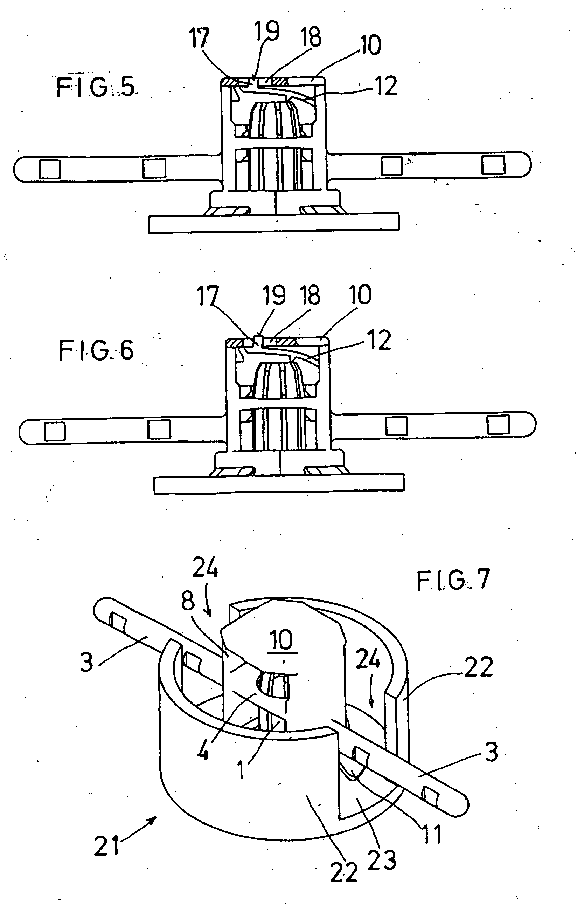

Bei dem in **Figur 5** gezeigten Ausführungsbeispiel ist kurz vor dem Ende **14** des Stabes **12** an dessen Oberseite eine nach oben abstehende, hammerartige Nase **17** und in der Querwand **10** eine entsprechende Aussparung **18** vorgesehen, in welche die Nase **17** nach dem Überspringen des Vorsprunges **15** eintaucht. Hierdurch wird nicht nur ein hörbarer Schlag erzeugt, sondern der Monteur kann auch noch mit seinem Daumen die in die Aussparung **18** eingetauchte Nasenspitze **19** spüren.

Bei dem Ausführungsbeispiel nach **Figur 6** ist die Höhe der Nase **17** so bemessen, daß die Nasenspitze **19** nach dem Eintauchen in die Aussparung **18** an der Oberseite der Querwand **10** etwas vorsteht, so daß die vortretende Nasenspitze **19** noch deutlicher spürbar ist. Außerdem wird hierdurch zusätzlich eine optische Anzeige für die korrekte Montage des Halteclips angeboten wird.

Bei allen Ausführungsformen weist der Stab **12** an seiner zum Bolzen **1** weisenden Unterseite im Abstand von der oberen Nase **17** eine weitere Stütznase **20** auf, welche beim Einführen des Bolzens **1** auf dessen Stirnfläche **16** aufliegt. Dadurch wird eine optimale Durchbiegung und Vorspannung im Stab **12** erreicht.

**Figur 7** zeigt ein vorteilhaftes Montagebeispiel für den erfindungsgemäßen Halteclip, wobei dieser in einem separaten Montagetopf **21** versenkt ist. Dieser Montagetopf **21** besteht aus zwei halbrunden Seitenwänden **22,** die über eine gemeinsame Bodenplatte **23** miteinander verbunden sind. Zwischen den Seitenwänden **22** ist nach beiden Richtungen eine Durchgangsöffnung **24** für die stangenförmigen Haltemittel **3** ausgespart. Diese können beispielsweise zur Halterung eines Kabelbaumes verwendet werden, welcher an den Haltestangen **3** mittels eines Klebebandes festgewickelt werden.

### Bezugszeichenliste

- 1: Bolzen
- 2: Aufnahmekörper
- 3: stangenartige Haltemittel
- 4: Haltelamellen
- 5: Haltekanten
- 6: Bolzenrippen
- 7: Seitenwand
- 8: Seitenwand
- 9: kreisrunder Rand
- 10: Querwand
- 11: Stützbeine
- 12: Stab
- 13: Aufnahmeraum
- 14: Freies Ende
- 15: Vorsprung
- 16: Stirnfläche
- 17: Hammerartige Nase
- 18: Aussparung
- 19: Nasenspitze
- 20: Stütznase
- 21: Montagetopf
- 22: Halbrunde Seitenwände
- 23: Bodenplatte
- 24: Durchgangsöffnung für Haltemittel

## Patentansprüche

1. Halteclip zur Befestigung von Funktionselementen auf einem Bolzen, insbesondere auf einem längsgerippten Kunststoffbolzen, bestehend aus einem Aufnahmekörper (2) für den Bolzen (1) mit einem längs einer Einführachse angeordneten unteren Rand zum Einführen des Bolzens und einem diesem gegenüberliegenden oberen Rand und an dem Aufnahmekörper angeformten Haltemittel (3) für die Funktionselemente, wobei der Aufnahmekörper (2) mit mehreren, längs der Achse stufenförmig versetzt gegenüberliegenden Haltelamellen (4) versehen ist, deren zur Achse gerichtete Haltekanten (5) sich im Gebrauch fest an der Bolzenwand anlegen, wobei am unteren Rand (9) des Aufnahmekörpers (2) schräg nach unten abstehende, flexible Stützbeine (11) angeformt sind, **dadurch gekennzeichnet, daß** oberhalb der Haltelamellen (4) an einer Seitenwand (7) ein sich quer zur Achse über den Aufnahmeraum (13) des Aufnahmekörpers (2) erstrechender, flexibler Stab (12) angeformt ist, dessen freies Ende (14) bis dicht unterhalb eines Vorsprungs (15) an der gegenüberliegenden Seitenwand (8) reicht, und daß der Aufnahmeraum (13) am oberen Rand dicht oberhalb des Stabes (12) von einer Querwand (10) überdeckt ist, gegen welche das freie Stabende (14) beim Einführen des Bolzens (1) nach dem Überspringen des Vorsprunges (15) hörbar anschlägt.

2. Halteclip nach Anspruch 1, **dadurch gekennzeichnet, daß** kurz vor dem freien Ende (14) des Stabes (12) an der zur Querwand (10) gerichteten Seite eine hammerartige Nase (17) angeformt ist und über der Nase (17) in der Querwand (10) eine entsprechende Aussparung (18) vorgesehen ist, in welche die Nase (17) nach dem Überspringen des Vorsprungs (15) durch den Stab (12) eintaucht.

3. Halteclip nach Anspruch 2, **dadurch gekennzeichnet, daß** die Höhe der Nase (17) so bemessen ist, daß die Nasenspitze (19) nach dem Eintauchen in die Aussparung (18) auf der Aussenseite der Querwand (10) etwas vorsteht.

4. Halteclip nach Anspruch 2 oder 3, **dadurch gekennzeichnet, daß** der Stab (12) an seiner zum Bolzen (1) weisenden Seite im seitlichen Abstand von der Nase (17) eine Stütznase (20) aufweist, welche beim Einführen des Bolzens (1) auf dessen Stirnfläche (16) aufliegt.

## Claims

1. A holding clip for fixing functional elements on a pin, in particular on a longitudinally ribbed plastic pin, comprising a receiving body (2) for the pin (1), having a lower edge for insertion of the pin, which lower edge is arranged along an insertion axis, and an upper edge arranged in opposite relationship thereto, and holding means (3) for the functional elements which are formed on the receiving body, wherein the receiving body (2) is provided with a plurality of holding plates (4) which are disposed in opposite relationship displaced in a stepped configuration along the axis and whose holding edges (5) which are directed towards the axis bear in use firmly against the wall of the pin, wherein inclinedly downwardly projecting, flexible support legs (11) are formed at the lower edge (9) of the receiving body (2), **characterised in that** formed on a side wall (7) above the holding plates (4) is a flexible bar (12) which extends transversely with respect to the axis over the receiving space (13) of the receiving body (2) and whose free end (14) extends to closely below a projection (5) on the opposite side wall (8), and that the receiving space (13) is covered at the upper edge closely above the bar (12) by a transverse wall (10) against which the free end (14) of the bar audibly impacts upon insertion of the pin (1) after jumping over the projection (15).

2. A holding clip according to claim 1 **characterised in that** shortly before the free end (14) of the bar (12) a hammer-like nose (17) is formed at the side directed towards the transverse wall (10) and provided above the nose (17) in the transverse wall (10) is a corresponding opening (18) into which the nose (17) engages after the projection (15) is jumped over by the bar (12).

3. A holding clip according to claim 2 **characterised in that** the height of the nose (17) is such that the nose tip (19) projects somewhat on the outside of the transverse wall (10) after it engages into the opening (18).

4. A holding clip according to claim 2 or claim 3 **characterised in that** at its side facing towards the pin (1) the bar (12) at a lateral spacing from the nose (17) has a support nose (20) which upon insertion of the pin (1) bears against the end face (16) thereof.

## Revendications

1. Agrafe de retenue pour la fixation d'éléments fonctionnels sur un goujon, notamment un goujon en matière plastique muni de nervures longitudinales, se composant d'un logement d'emmanchement (2) pour le goujon (1) comportant un bord inférieur disposé le long de l'axe d'introduction pour l'emmanchement du goujon et un bord supérieur diamétralement opposé à celui-ci et des organes de retenue (3) pour les éléments fonctionnels, réalisés solidaires par moulage du logement d'emmanchement, le logement d'emmanchement (2) étant en l'occurrence muni de plusieurs ailettes de retenue (4) respectivement opposées, agencées le long de l'axe selon une disposition décalée en gradins, dont les arêtes de retenue (5) orientées en direction de l'axe viennent, en service pratique, prendre solidement appui contre la paroi du goujon, des pattes d'appui flexibles (11) faisant saillie vers le bas selon une disposition oblique étant en l'occurrence réalisées solidaires par moulage du bord inférieur (9) du logement d'emmanchement (2), **caractérisée en ce qu'**un jonc flexible (12) s'étendant transversalement par rapport à l'axe, au-dessus du gabarit d'emmanchement (13) du logement d'emmanchement (2) est réalisé solidaire par moulage d'une paroi latérale (7) au-dessus des ailettes de retenue (4), dont l'extrémité libre (14) s'étend jusqu'à un point se situant juste en-dessous d'un ressaut (15) que comporte la paroi latérale opposée (8) et **en ce que** le gabarit d'emmanchement (13) est recouvert, au niveau du bord supérieur, juste au-dessus du jonc (12), par une paroi transversale (10), contre laquelle l'extrémité libre (14) du jonc vient, lors de l'emmanchement du goujon (1) cogner de manière audible, après avoir passé le ressaut (15) par cédage élastique.

2. Agrafe de retenue selon la revendication 1, **caractérisée en ce qu'**un ergot en forme de marteau (17) est réalisé, à faible distance de l'extrémité libre (14) du jonc (12), solidaire par moulage de son côté orienté vers la paroi transversale (10) et **en ce qu'**il est prévu, au-dessus de l'ergot (17), un évidement correspondant (18) dans la paroi transversale (10), dans lequel l'ergot (17) vient s'insérer en prise d'encastrement après que le jonc (12) a franchi par cédage élastique le ressaut (15).

3. Agrafe de retenue selon la revendication 2, **caractérisée en ce que** la hauteur de l'ergot (17) est étudiée de telle façon que la portion pointue (19) de l'ergot, après que celui-ci s'est inséré en prise d'encastrement dans l'évidement (18), fait légèrement saillie sur la face extérieure de la paroi transversale (10).

4. Agrafe de retenue selon la revendication 2 ou 3, **caractérisée en ce que** le jonc (12) comporte, sur sa face orientée en direction du goujon (1), à une certaine distance dans le plan latéral de l'ergot (17), un ergot d'appui (20) qui, lors de l'emmanchement en position du goujon (1), vient s'appliquer sur sa face antérieure (16).
